# EUROPEAN PATENT SPECIFICATION

(11) **EP 3 405 877 B1**
(45) Date of publication and mention of the grant of the patent: **21.09.2022**
(21) Application number: 16886739.8
(22) Date of filing: 22.01.2016
(51) Int. Cl.: G06F 15/173, H04W 36/00, H04W 4/24, H04M 15/00, H04L 12/14, G06F 9/48, H04L 65/40

(54) **APPLICATION RELOCATION BETWEEN CLOUDS**
ANWENDUNGSVERLAGERUNG ZWISCHEN CLOUDS
RÉIMPLANTATION D'APPLICATIONS ENTRE NUAGES

(43) Date of publication of application: 28.11.2018
(73) Proprietor: Nokia Solutions and Networks Oy, 02610 Espoo (FI)
(72) Inventor: CHANDRAMOULI, Devaki, Plano TX 75025 (US); LIEBHART, Rainer, 81476 Munich (DE)
(74) Representative: Nokia EPO representatives
(86) International application number: PCT/US2016/014442
(87) International publication number: WO 2017/127102

(56) References cited:
- WO-A1-2015/104545
- US-A1- 2006 075 073
- US-A1- 2011 170 517
- US-A1- 2012 016 977
- US-A1- 2012 064 908
- US-A1- 2013 138 814
- US-A1- 2014 050 103

## Description

### BACKGROUND:

### Field:

Various communication systems may benefit from improved handover procedures. For example, certain handover procedures involving edge clouds in a 5G or LTE network may benefit from seamless handover.

### Description of the Related Art:

5^{th} generation (5G) is a new generation of radio systems and network architecture that can deliver extreme broadband and ultra-robust, low latency connectivity. 5G also allows for massive machine-to-machine connectivity for the Internet of Things (IoT). The 5G architecture can aid the programmable world, and help transform modern economies and societies.

5G provides several areas of improvement. First, 5G can be used to provide massive broadband that delivers gigabytes of bandwidth per second on demand, in both uplink and downlink transmissions. Second, 5G can aid in machine-type communication that allows for immediate synchronous eye-hand feedback. For example, extreme low end-to-end (E2E) latency can aid with remote control of robots and cars. Third, 5G facilitates a massive machine-type communication that can connect billions of sensors and machines.

5G is also designed to support a wide diversity of use cases. 5G may not only be a "new radio access technology family," but its architecture will expand to multiple dimensions by providing a common core for multiple radio technologies, such as cellular, fixed, and wireless local area network. The 5G core can also provide for multiple services, such as IoT, mobile broadband, and low-latency high reliability service, as well as multiple network and service operators.

LTE (Long Term Evolution) or the E-UTRAN (Evolved Universal Terrestrial Access Network) is the access part of the Evolved Packet System (EPS). LTE can help to address user demands for higher data rate and quality of service. By providing high spectral efficiency, high peak data rates, short round trip time, as well as flexibility in frequency and bandwidth, LTE can help improve the user experience. The LTE may also provide various other benefits including packet switch optimization, continued demand for cost reduction, low complexity, and avoiding unnecessary fragmentation of technologies for paired and unpaired band operation.

US2014/050103A1 discloses computer-implemented methods, systems, computing devices, and computer-readable media for monitoring, by a mobile proxy associated with a control system, of a cloud radio access network (C-RAN), application layer data traffic between the control system and a wireless communication device. It discloses that the mobile proxy may, based on the monitoring, facilitate alteration of data plane or control plane processing by the wireless communication device or a remote radio head (RRH) associated with the C-RAN.

US2013/138814A1 discloses a device which receives load information associated with one or more mobile gateways or server devices provided in cloud networks, and receives functionality information associated with the one or more mobile gateways or server devices provided in the cloud networks.

WO2015/104545A1 discloses an application server platform, in which application states are transferred upon a UE handover.

### SUMMARY:

The invention is defined by the independent claims. Preferred embodiments are set out in the dependent claims.

A method, in certain examples, may include receiving at a first application server located in a first cloud a handover notification that a user equipment is moving to a radio network being served by a second application server located in a second cloud, where the application server is running an application session for the user equipment. The method can also include transferring the application session to the second application server.

According to certain examples, an apparatus may include at least one memory including computer program code, and at least one processor. The at least one memory and the computer program code may be configured, with the at least one processor, to cause the apparatus at least to receive at a first application server located in a first cloud a handover notification that a user equipment is moving to a radio network being served by a second application server located in a second cloud, wherein the application server is running an application session for the user equipment. The at least one memory and the computer program code may also be configured, with the at least one processor, to cause the apparatus at least to transfer the application session to the second application server.

An apparatus, in certain examples, may include means for receiving at a first application server located in a first cloud a handover notification that a user equipment is moving to a radio network being served by a second application server located in a second cloud, where the application server is running an application session for the user equipment. The apparatus may also include means for transferring the application session to the second application server.

According to certain examples, a non-transitory computer-readable medium encoding instructions that, when executed in hardware, perform a process. The process may include receiving at a first application server located in a first cloud a handover notification that a user equipment is moving to a radio network being served by a second application server located in a second cloud, where the application server is running an application session for the user equipment. The process may also include transferring the application session to the second application server.

According to certain examples, a computer program product encoding instructions for performing a process according to a method including receiving at a first application server located in a first cloud a handover notification that a user equipment is moving to a radio network being served by a second application server located in a second cloud, where the first application server is running an application session for the user equipment. The method may also include transferring the application session to the second application server.

A method, in certain examples, may include receiving a handover event notification request from a first application server in a first cloud, including an identifier for a user equipment, where the first application server is running an application session for the user equipment. The method may also include sending the first application server a handover notification that the user equipment is moving to a radio network being served by a second application server in a second cloud.

According to certain examples, an apparatus may include at least one memory including computer program code, and at least one processor. The at least one memory and the computer program code may be configured, with the at least one processor, to cause the apparatus at least to receive handover event notification request from a first application server in a first cloud, including an identifier for a user equipment, where the first application server is running an application session for the user equipment. The at least one memory and the computer program code may also be configured, with the at least one processor, to send the first application server a handover notification that the user equipment is moving to a radio network being served by a second application server in a second cloud.

An apparatus, in certain examples, may include means for receiving a handover event notification request from a first application server in a first cloud, including an identifier for a user equipment, where the first application server is running an application session for the user equipment. The apparatus may also include means for sending the first application server a handover notification that the user equipment is moving to a radio network being served by a second application server in a second cloud.

According to certain examples, a non-transitory computer-readable medium encoding instructions that, when executed in hardware, perform a process. The process may include receiving a handover event notification request from a first application server in a first cloud, including an identifier for a user equipment, where the first application server is running an application session for the user equipment. The process may also include sending the first application server a handover notification that the user equipment is moving to a radio network being served by a second application server in a second cloud.

According to certain examples, a computer program product encoding instructions for performing a process according to a method including receiving a handover event notification request from a first application server in a first cloud, including an identifier for a user equipment, where the first application server is running an application session for the user equipment. The method may also sending the first application server a handover notification that the user equipment is moving to a radio network being served by a second application server in a second cloud.

### BRIEF DESCRIPTION OF THE DRAWINGS:

For proper understanding of the invention, reference should be made to the accompanying drawings, wherein:
Figure 1 illustrates an exemplary network architecture illustrating cloud technology.
Figure 2 illustrates a signal flow diagram according to certain embodiments.
Figure 3 illustrates a signal flow diagram according to certain embodiments.
Figure 4 illustrates an exemplary network architecture illustrating cloud technology.
Figure 5 illustrates a signal flow diagram according to certain embodiments.
Figure 6 illustrates a signal flow diagram according to certain embodiments.
Figure 7 illustrates a flow diagram according to certain embodiments.
Figure 8 illustrates a flow diagram according to certain embodiments.
Figure 9 illustrates a system according to certain embodiments.

### DETAILED DESCRIPTION:

In uses requiring extreme low latency applications, for example, below 10 milliseconds, a low E2E delay can be achieved with a new 5G radio interface design. The low latency E2E may also need the network application to reside close to the application client residing on the user equipment (UE). To do so, a gateway, which terminates the UE's bearer, and the network application providing the service can both reside in an edge cloud. The edge cloud may either be provided close to the 5G base station (5GNB), or directly at or on the 5GNB platform serving the UE. In another embodiment, the edge cloud may be provided close to an LTE evolved NodeB (eNB), or directly at or on the eNB platform service the UE.

Edge clouds help to facilitate the proximity of the network applications and the gateway to the serving UE. Mobile Edge Computing (MEC), which can sometimes be synonymous to edge clouds, can also help to provide network applications close to the end user. Unlike a Telco cloud, which may be built from core network entities, the edge clouds may be built from locally distributed data centers.

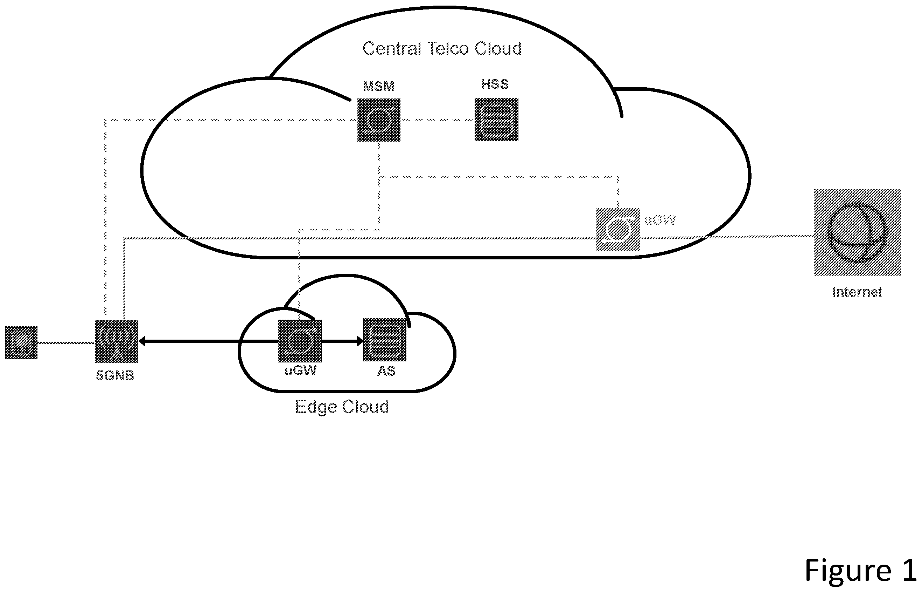

Figure 1 illustrates an exemplary network architecture of 5G cloud technology. Specifically, Figures 1 illustrates a central Telco cloud, including a 5G Mobility and Session Management entity (MSM) and a Home Subscriber Server (HSS). In Long Term Evolution (LTE) terms, the MSM can be a combination of a mobility management entity (MME), Serving Gateway (SGW) and Packet Data Network Gateway (PGW) control plane parts, and a Policy and Charging Rules Function (PCRF).

The edge cloud can also include a user plane gateway (uGW) that can be the distributed user plane gateway, which may be controlled by the MSM. In LTE terms, the uGW may be the Serving Gateway (SGW) and a Packet Data Network Gateway (PGW) user plane parts.

The uGW located in the edge cloud acts as an internet protocol (IP) anchor point. The UE's IP address can be assigned from the uGW's address pool or from the MSM or any other entity. As a result, if the UE moves to a new location closer to a different edge cloud, having a different gateway and a different application server, the UE may need to undergo handover. Some embodiments can ensure that the application session is maintained without interruption, even when the application session may need to be transferred to a different application server.

Certain embodiments provide for a seamless continuation of an application session for a UE when servicing of the UE moves from a first edge cloud to a second edge cloud. In particular, the gateway in the second edge cloud may seamlessly begin to host the UE's IP address, while avoiding interruptions or breaks in the application session.

Some embodiments can provide a method for selecting the second edge cloud, including the second gateway and the second application server (AS). A procedure for efficiently transferring context data from the first gateway, in the first edge cloud, to a new gateway may also be provided. In addition, an efficient procedure for transferring context data from the first AS, in the first edge cloud, to the second AS may be provided.

In the case where a session application for a UE requires handover from the first edge cloud to the second edge cloud, the first AS, which is currently serving the UE, may be informed by the mobile network about the UE moving from the first edge cloud to the second edge cloud. The application session can then be transferred by different application techniques to the second or target AS, in the second edge cloud. Such a seamless handover can allow the application session for the UE to continue without any interruptions or breaks.

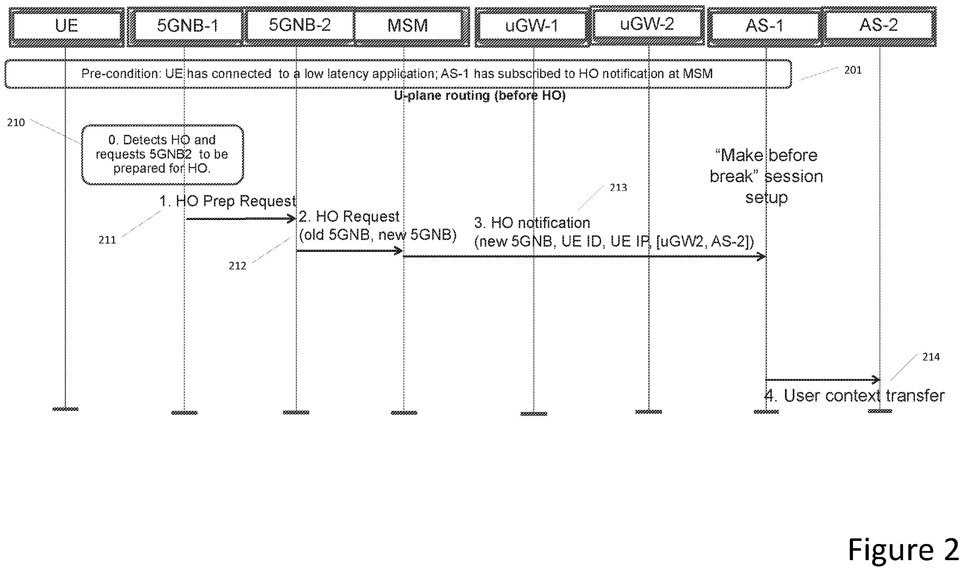

Figure 2 illustrates a signal flow diagram according to certain embodiments. Specifically, Figure 2 illustrates a signal flow diagram for relocating the uGW and AS between two edge clouds when the UE is moving from the serving area of one edge cloud into the serving area of another edge cloud. In addition, in the embodiment of Figure 2, the AS may initiate the session setup. In step 201, the UE can connect to a low latency application session. The first AS in the first edge cloud can subscribe to the MSM for mobility management, if the specific application session in use has a need for seamless handover. As shown in Figure 1, the MSM may be located in the central Telco cloud. In other embodiments, the first AS may subscribe to any other network entity, located either in the Telco cloud or the edge cloud that are aware and/or are involved in the handover decisions. For example, the first AS may also subscribe to the 5GNB or to an LTE eNB.

In order for the first AS to be able to send a request to subscribe for mobility management events to the MSM, the first AS may need to be able to identify to which MSM the event notification request must be sent. The first AS may contact the correct MSM through various methods. For example, as the uGW in the edge cloud acts to terminate the bearer for the UE and allocate the UE IP address, it can become aware of the desired MSM identifier. The uGW in the edge cloud can therefore provide a MSM identifier, such as an IP address or a name, to the first AS. Alternatively, the first AS can also make a database lookup to receive the MSM address or send the request to a default MSM which further routes the request to the correct MSM. Because the first AS can be hosted in the same edge cloud as uGW, the Access Point Name (APN) of the first AS may be known to the uGW. In other embodiments, the first AS may be known to the uGW through other identification.

In certain embodiments, a tunnel between the first AS and the uGW can be established to ensure proper routing between the first AS and the uGW. In other embodiments, the routing path between the first AS and the uGW in the edge cloud can be created with the help of Software Defmed Networking (SDN) mechanisms. For example, the MSM may instruct SDN to setup such a path.

Alternatively, the first AS may be configured with a logical MSM address that is resolved together with the UE identifier, such as MSISDN, IMSI, or optionally an application ID. The first AS can use the UE identifier to determine the actual MSM address serving the UE. Determining the MSM address may be included in the event notification request message sent via the Application Programming Interface (API) from the first AS to the MSM. As such, an API gateway can translate and/or direct the event notification request message to the correct MSM. The HSS may be in the Telco cloud, where the MSM is also stored, can help in sending the message to the correct MSM using the API.

As described above, the first AS may subscribe to the MSM for HO event notification via an API, which can be provided by the MSM. The AS may then use the API to request to subscribe to the MSM for handover event notification. The handover event notification request from the first AS to the MSM may include a UE identifier. For example, the UE identifier may be a Mobile Subscriber Integrated Services Digital Network Number (MSISDN), an International Mobile Subscriber Identity (IMSI), or any other identifier that has previously been stored in the HSS, or another database, and may be known to both the MSM and the AS. The UE identifier may be used by the MSM to identify the UE.

In certain embodiments, the MSM may not need to identify the particular application. The UE identifier can be different from the application identifier (ID) used on the application layer. In some embodiments, however, the network may already have knowledge of the application ID. For example, some relationship can be assumed between the mobile network operator and the application service providers, in which application specific information, such as application ID, can be shared. The application ID may therefore be stored in a network entity in the mobile network. In certain embodiments the network entity may be an HSS.

Once the first AS has subscribed to the MSM, the MSM may inform the first AS of certain mobility events of the UE. One such event is an ongoing handover of the UE. When subscribing to the MSM, the first AS may subscribe to all handovers of a particular UE, or to all handovers of a particular set of UEs.

Alternatively, the AS may selectively subscribe to only some handovers. For example, the AS may only subscribe to a UE handover in a certain area. The area may be defined as a set of cells, tracking area(s), presence area(s), or, as defined in the claims, edge cloud
service area(s). The edge cloud service area can consist of all 5GNB or LTE eNB that are connected to a particular edge cloud. Once the first AS specifies an area, the MSM may only inform the first AS about an ongoing handover if the UE moves from one such area to another area.

To accurately inform the first AS of UE movement between areas, the MSM may maintain the edge cloud service area, and a mapping of the edge cloud service area to corresponding 5GNBs and/or cell IDs, for example evolved cell global identifiers (ECGIs). In certain embodiments, the MSM may also be aware of area changes of a UE. The MSM may inform the UE and/or the first AS about the edge cloud service area mapping list. When the UE is informed of the edge cloud service area, it may notify the MSM and/or first AS when it moves from one edge cloud service area to another edge cloud service area. The UE can send such a notification when the UE is in connected or idle mode. This can help the MSM and/or the AS to determine accurately when such area changes occur due to both idle mode mobility and connected mode handover.

In step 201 of Figure 2, the UE is connected to a low latency application session, and the first AS has subscribed to the handover notifications at the MSM. An old 5GNB, which currently serves the UE, may detect that the UE needs to handover, in step 210. The old 5GNB may then initiate a request to a new target 5GNB, knowing that the new target 5GNB may be involved in the handover. In other embodiments, an old LTE eNB may initiate a request to a new target LTE eNB. In step 211, the handover prep request is sent from the old 5GNB, which currently serves the UE, to the new target 5GNB. The new target 5GNB can then prepare for the handover. The new target 5GNB can then send the request to the MSM, as shown in step 212. The handover request can include information about the old 5GNB and the new target 5GNB.

In step 213, if the first AS subscribed to the handover event, the MSM notifies the first AS about the handover request. The MSM can include in the handover request information regarding the new 5GNB, the UE identity, such as MSISDN, IMSI, or application ID, and the UE IP address. The MSM can also include information about the second AS. Receiving at least a part of this information can allow the first AS to adequately determine if it serves the new target 5GNB, and if the uGW connected to the first AS also serves the new target 5GNB. If not, meaning that the first AS and uGW do not serve the new target 5GNB, the first AS may provide the UE context information to the second AS in the new 5GNB serving area, as shown in step 214. In doing so, the first AS transfers application specific session data to the second AS.

In some embodiments, the first AS may use the MSM as in intermediary when providing the UE context to the second AS. In other words, the first AS may send the UE context to the MSM, which can then forward the context to the second AS. In other embodiments, the first AS may directly send the UE context information to the second AS.

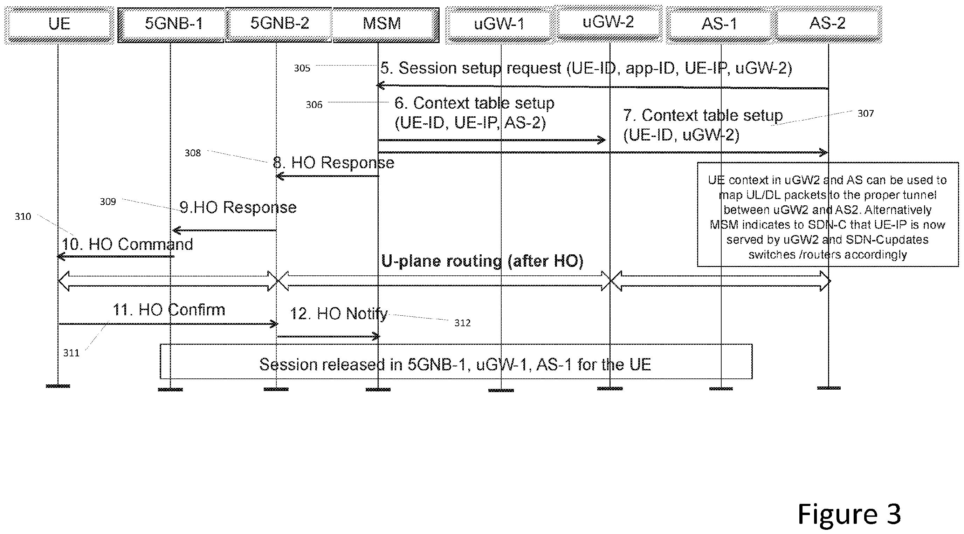

Figure 3 illustrates a signal flow diagram according to certain embodiments. Once the second AS receives the application specific session data from the first AS, the second AS may inform the MSM about the transfer, and the second AS may initiate a session setup for the UE with the MSM, as shown in step 305. This session setup request message sent from the second AS to the MSM can include a UE ID, an application ID, and some information about the new gateway in the second edge cloud. The second AS can initiate the setup to ensure a make between the first AS and the second AS before a break occurs for the handover. This may allow the network to avoid a communication disruption caused by a change in the IP address from the first AS to the second AS.

However, in some embodiments, where the MSM may be used as an intermediary in the transfer, step 305 may not be necessary, since the MSM would already know of the transfer of context information between be informed of the transfer.

In step 306, the MSM sets up the routing/context table in the new gateway in the second edge cloud. The routing/context may be UE specific, and may include the UE ID, UE IP address, information about the second AS, including the address of the second AS, and other relevant information. In step 307, the MSM similarly sets up routing/context table within the second AS, also located in the second edge cloud. The routing/context may be UE specific, and may include the UE ID, UE IP address, information about the new gateway in the second edge cloud, and other relevant information.

The MSM, in certain embodiments, can therefore inform the new GW of the second AS, and the second AS of the new GW, and help to facilitate the routing of packets between the two in the second edge cloud. UE context in new GW and second AS can be used to map uplink or downlink packets to the proper tunnel between the new GW and second AS. In some other embodiments, MSM can indicate to an SDN flow control device (SDN-C) that the UE IP is being served by a new GW, at which point the SDN-C may update switches and/or routers in the second edge cloud accordingly.

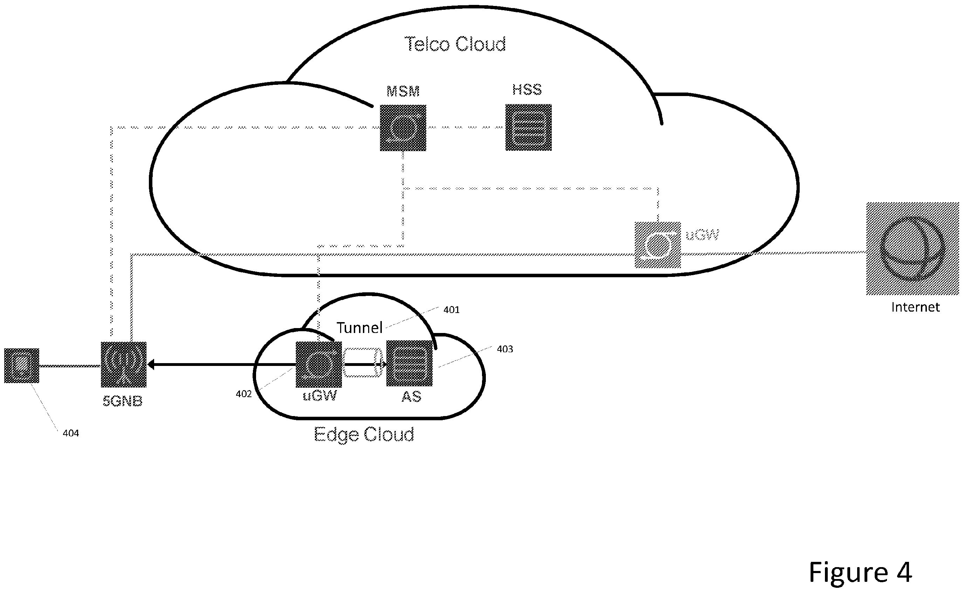

Figure 4 illustrates an exemplary network architecture illustrating cloud technology. In certain embodiments, a tunnel 401 may be established between the uGW 402 and the second AS 403 in the second edge cloud. Tunnel 401 may be established based on APN, as discussed above. Packets can then be mapped to tunnel 401 based on the IP address of UE 404 in the IP header of the data packets.

In certain embodiments, proper routing between uGW 402 and the second AS 403 may be ensured by at least one of L2 switching, L3 routing at uGW 402, L2/L3 tunnel between uGW and AS based on the APN, or uGW and AS collocated on same platform in the second edge cloud using direct communication. The direct communication may be an inter-process or an inter-platform communication. In some embodiments, for L2 switching and L3 routing at uGW, the SDN may be used to update routers and/or switches in the second edge cloud.

In the embodiments of Figure 3, once the MSM sets up the routing tables in the new GW and the second AS, it may then send a handover response to the new 5GNB, in step 308. In step 309, the new 5GNB can then forward or send the handover response to the original or old 5GNB. The original or old 5GNB may then send a handover command to the UE. At this point, the new user plane path may already be established between the UE, the new 5GNB, and the second edge cloud, which includes both the new uGW and the second AS. This user plane path can help facilitate seamless handover of the application session to the second edge cloud without a service interruption to the UE.

In step 311, the UE can send a confirmation message to the new 5GNB confirming the handover, and the new 5GNB may then notify the MSM of the handover, in step 312. Once the MSM is notified, resources in the old 5GNB, old GW, and first AS may be released.

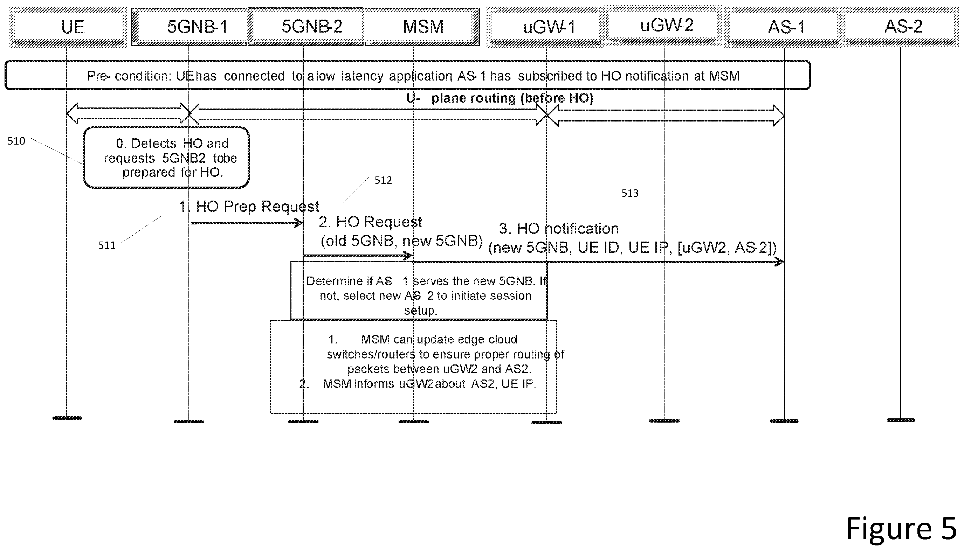

Figure 5 illustrates a signal flow diagram according to certain embodiments. Specifically, Figure 5 illustrates a signal flow diagram in which the MSM initiates the session setup. In step 510, the old 5GNB, which currently serves the UE, can detect that the UE may need a handover, and requests that a new target 5GNB to be prepared for a handover. In step 511 the old 5GNB may initiate and send the handover preparation request to the new target 5GNB. In step 512 the new 5GNB can send the handover request, including information about the old 5GNB and the new target 5GNB, to the MSM.

In certain embodiments, the MSM may need to know that the new 5GNB is served by the second edge cloud. Information pertaining to a relationship between the second edge cloud and the new 5GNB may be configured in the MSM or fetched from a database in the Telco cloud, in which the MSM is located.

In some embodiments, the MSM can also select the new uGW and the second AS in the second edge cloud serving the new target 5GNB. The MSM may first determine if the first AS serves the new target 5GNB. If not, then the MSM may then select the second AS to initiate session setup. Information pertaining to the new uGW and the second AS can be configured in the MSM, or a database to which the MSM has access. In other embodiments, the new 5GNB may select the uGW and inform the MSM of its selection. For example, in step 512 the new 5GNB may include an indication of which uGW it has selected.

In step 513, the MSM can notify the first AS of the handover. In the notification message, the MSM may include information pertaining to the new 5GNB, UE ID, UE IP, and new gateway, and the second AS. In certain embodiments, the MSM may not be able to provide the first AS with the second AS address. In such embodiments, the first AS may be configured with data allowing it to select a second AS serving the new target 5GNB. Based on a logical second AS name, together with an ID of the second edge cloud provided by the MSM, the first AS may be able to determine the second AS address, without the MSM explicitly providing such information.

In the embodiment shown in Figure 5, the MSM may indicate to the SDN infrastructure that the IP address of the UE can be served by the new uGW, and can adapt the routing paths in the second edge cloud accordingly. In certain embodiments, the IP address of the UE may not be changed during handover. The routing paths adapted by the MSM, with help from the SDN, in the second edge cloud can be Layer 2 or Layer 3 connections, as described above in the discussion of Figure 4. In certain embodiments, the MSM, with help from the SDN, can update the second edge cloud switches or routers to ensure proper routing of packets between the new gateway and the second AS. Yet in other embodiments, the MSM can provide the new gateway with information pertaining to the second AS and the UE IP.

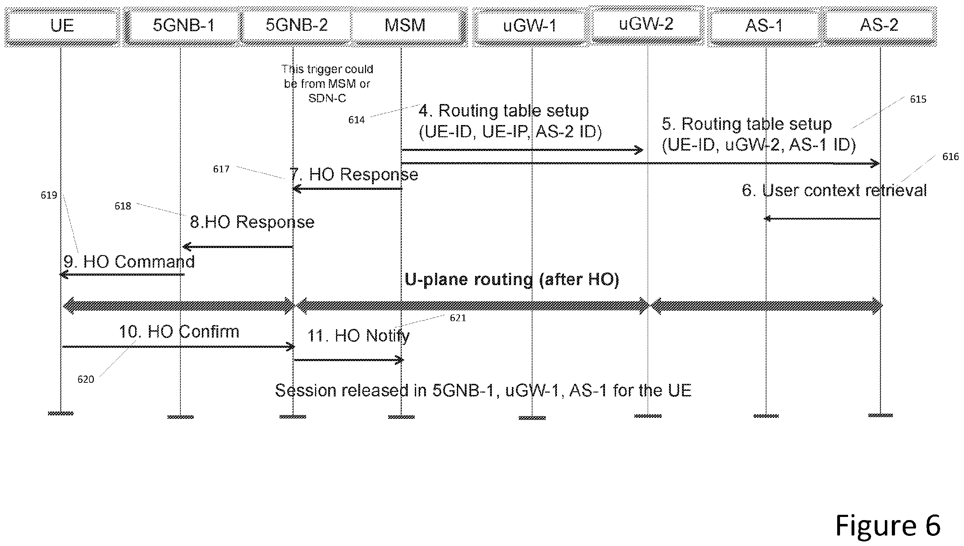

Figure 6 illustrates a signal flow diagram according to certain embodiments. Specifically, Figure 6 illustrates a signal flow diagram in which the MSM initiates the session setup. In contrast to Figure 3, the MSM in the embodiment of Figure 6 may trigger the routing table/context setup. In some other embodiments, the SDN-C may trigger the routing table/context setup. In steps 614 and 615 the MSM sets up the routing tables in the new gateway and the second AS. The second AS can then initiate application session context retrieval with the first AS, as shown in step 616. In step 617, the MSM may send a handover response to the new target 5GNB. The new target 5GNB can then send the handover response to the old 5GNB, in step 618, which can then send a handover command to the UE, in step 619.

Since the new user plane between the UE, new target 5GNB, the new GW, and the second AS may already be established, routing of the application session can occur without disruption of service. In step 620, the UE can confirm the handover towards the new 5GNB, which may then notify the MSM, in step 621. Resources allocated by the old 5GNB, old uGW, and first application server can then be released.

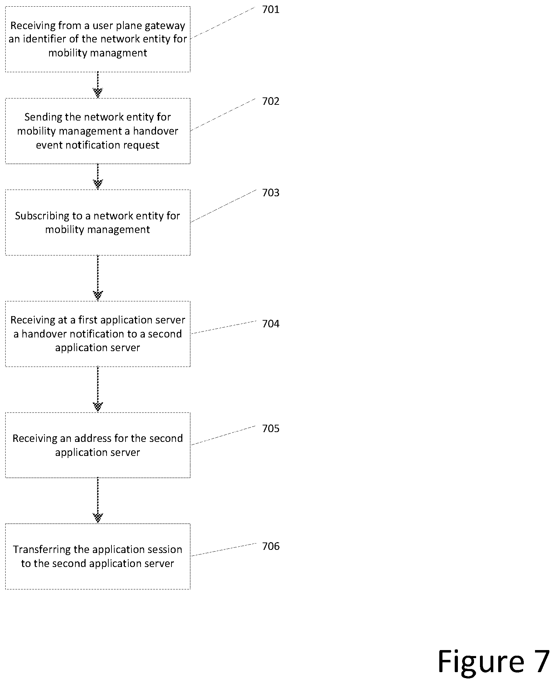

Figure 7 illustrates a flow diagram according to certain embodiments. In step 701, the first AS in a first edge cloud may receive from a user plane gateway an identifier of the network entity for mobility management, such as MSM. In step 702, the first AS may send the network entity for mobility management a subscribe request. In the request, the first AS may specify which handover notifications it would like to receive.

In step 704, the first AS may receive from the MSM, or any other network entity, a handover notification that the UE is moving to a radio network provided by, for example, a 5GNB or LTE eNB, being served by a second AS located in a second edge cloud. In step 705, the first AS may receive address information relating to the second application server. The address information may also be included in the handover notification sent to the first AS from the MSM. The first AS can then transfer the application session to the second AS, as shown in step 706.

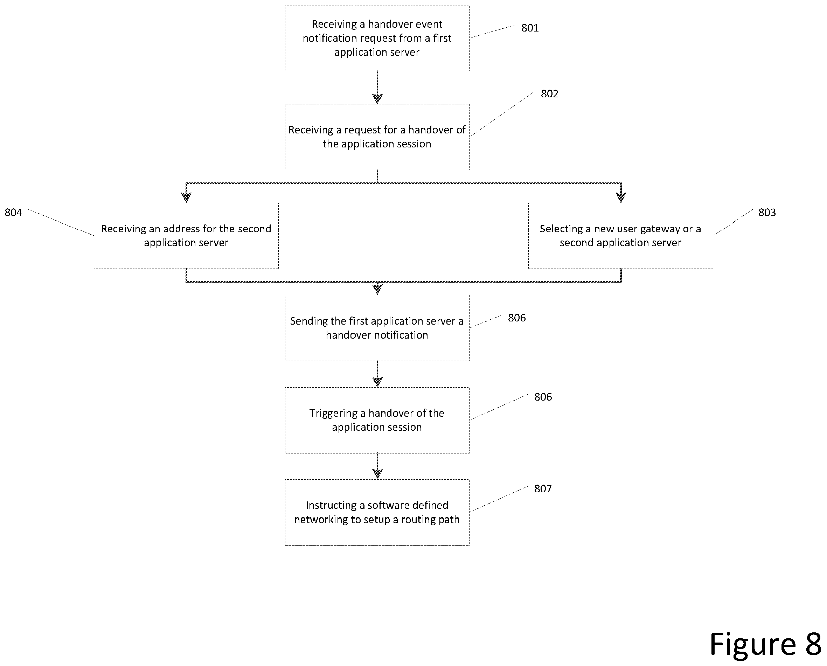

Figure 8 illustrates a flow diagram according to certain embodiments. In step 801, an MSM may receive a handover event notification request from a first AS. The request may specify to which handover notifications the first AS would like to subscribe. In step 802, the MSM may receive a request for a handover from a new 5GNB. In step 803, the MSM may select a new uGW and/or a second AS belonging to a new 5GNB. In other embodiments, in step 804, the MSM may receive an address for the second AS. The MSM can also send the first AS a handover notification, including information relating to the second AS and the new uGW, as shown in step 805. The MSM can then trigger initiations of the session setup with at least the new uGW or the second AS, as shown in step 806. In step 807, the uGW may instruct a SDN to setup a routing path between the new uGW and the second AS.

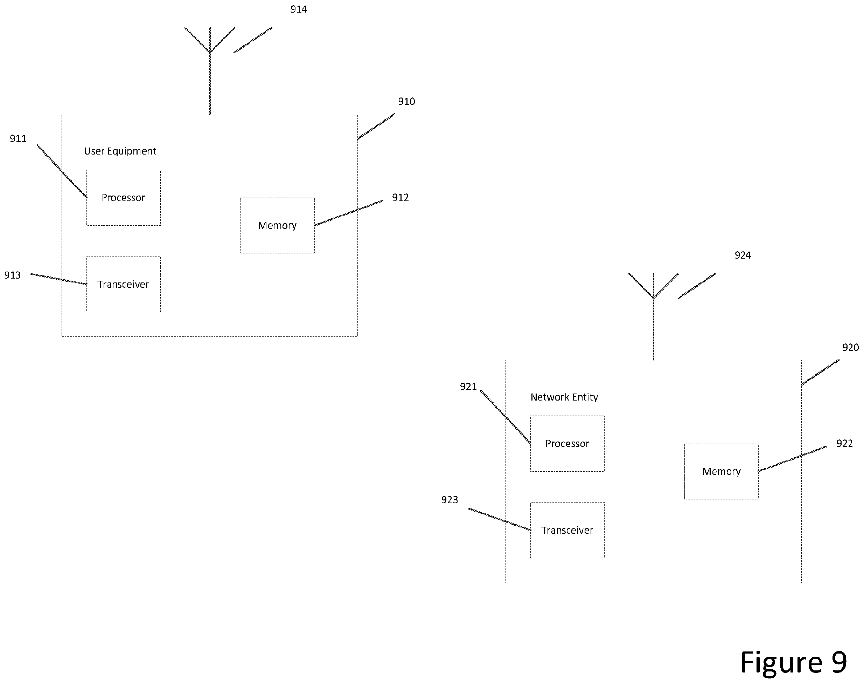

Figure 9 illustrates a system according to certain embodiments. It should be understood that each block of the signal flow charts in Figures 2, 3, 5, 6, and the flow charts in Figures 7 and 8, or any combination thereof, may be implemented by various means or their combinations, such as hardware, software, firmware, one or more processors and/or circuitry. In one embodiment, a system may include several devices, such as, for example, a network entity 920 or UE or user device 910. The system may include more than one UE 910 and more one network entities 920, although only one access node shown for the purposes of illustration. A network entity can be a network node, a base station, an eNB, a GW, a MSM, an AS, a 5GNB, a server, a host or any of the other access or network node discussed herein.

Each of these devices may include at least one processor or control unit or module, respectively indicated as 911 and 921. At least one memory may be provided in each device, and indicated as 912 and 922, respectively. The memory may include computer program instructions or computer code contained therein. One or more transceiver 913 and 923 may be provided, and each device may also include an antenna, respectively illustrated as 914 and 924. Although only one antenna each is shown, many antennas and multiple antenna elements may be provided to each of the devices. Other configurations of these devices, for example, may be provided. For example, a network entity 920 and UE 910 may be additionally configured for wired communication, in addition to wireless communication, and in such a case antennas 914 and 924 may illustrate any form of communication hardware, without being limited to merely an antenna.

Transceivers 913 and 923 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

A user device or user equipment 910 may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof.

In some embodiment, an apparatus, such as an access node, may include means for carrying out embodiments described above in relation to Figures 2, 3, 5, 6, 7, and 8. In certain embodiments, at least one memory including computer program code can be configured to, with the at least one processor, cause the apparatus at least to perform any of the processes described herein.

According to certain embodiments, an apparatus 920 may include at least one memory 922 including computer program code, and at least one processor 921. The at least one memory 922 and the computer program code are configured, with the at least one processor 921, to cause the apparatus 920 at least to receive at a first application server located in a first cloud a handover notification that a user equipment is moving to a radio network being served by a second application server located in a second cloud, where the application server is running an application session for the user equipment. The at least one memory 922 and the computer program code are configured, with the at least one processor 921, to also cause the apparatus 920 at least to transfer the application session to the second application server.

According to certain embodiments, an apparatus 920 may include means for receiving information about a streaming service, and means for receiving at a first application server located in a first cloud a handover notification that a user equipment is moving to a radio network being served by a second application server located in a second cloud, where the application server is running an application session for the user equipment. The apparatus 920 may also include means for transferring the application session to the second application server.

According to certain embodiments, an apparatus 920 may include at least one memory 922 including computer program code, and at least one processor 921. The at least one memory 922 and the computer program code are configured, with the at least one processor 921, to cause the apparatus 920 at least to receive a handover event notification request from a first application server in a first cloud, including an identifier for a user equipment, where the first application server is running an application session for the user equipment. The at least one memory 922 and the computer program code are configured, with the at least one processor 921, to also cause the apparatus 920 at least to send the first application server a handover notification that the user equipment is moving to a radio network being served by a second application server in a second cloud.

According to certain embodiments, an apparatus 920 may include means for receiving information about a streaming service, and means for receiving a handover event notification request from a first application server in a first cloud, including an identifier for a user equipment, where the first application server is running an application session for the user equipment. The apparatus 920 may also include means for sending the first application server a handover notification that the user equipment is moving to a radio network being served by a second application server in a second cloud.

Processors 911 and 921 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 912 and 922 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as a network entity 920 or UE 910, to perform any of the processes described above (see, for example, Figures 2, 3, 5, 6, 7, and 8). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Furthermore, although Figure 9 illustrates a system including a network entity 920 and UE 910, certain embodiments may be applicable to other configurations, and configurations involving additional elements, as illustrated and discussed herein. For example, multiple user equipment devices and multiple network entities may be present, or other nodes providing similar functionality, such as nodes that combine the functionality of a user equipment and a network entity, such as a relay node. For example, the UE 910 may be configured for device-to-device communication.

Certain embodiments described above can allow for seamless handover of an application session between a first edge cloud and a second edge cloud. Some embodiments may allow for the preservation of the UE's IP address in low latency applications. Some embodiments may also be applicable to Mobile Edge Computing (MEC) scenarios.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. While some embodiments can be directed to a 5G environment, other embodiments can be directed to an LTE environment.

### Partial Glossary

- API: Application Programming Interface
- APN: Access Point Name
- AS: Application Server
- E2E: End-to-End
- HO: Handover
- HSS: Home Subscriber Server
- IoT: Internet of Things
- IP: Internet Protocol
- M2M: Machine-to-Machine
- MSM: Mobility and Session Management
- MME: Mobility Management Entity
- GW: Gateway
- uGW: user plane Gateway
- MEC: Mobile Edge Computing
- SGW: Serving Gateway
- PCRF: Policy and Charging Rules Function
- MSISDN Mobile Subscriber: Integrated Services Digital Network Number
- IMSI: International Mobile Subscriber Identity
- UE: User Equipment
- SDN: Software Defined Networking

## Claims

1. A method performed by a first application server located in a first edge cloud, the method comprising:
sending (201), to a core network entity for mobility management, a request to subscribe to handover event notifications for a user equipment, the request including an identity for the user equipment,
wherein the handover event notifications for the user equipment relate to handovers from a first service area of the first edge cloud to a second service area of a second edge cloud, wherein the second service area is served by a second application server located in the second edge cloud, wherein the core network entity for mobility management is configured to participate in the handover signalling of the user equipment;
receiving (213), from the core network entity for mobility management, a handover event notification indicating that the user equipment is moving from the first service area to the second service area, wherein the first application server is running an application session for the user equipment; and
transferring (214) the application session to the second application server.

2. The method according to claim 1, further comprising:
receiving, from a user plane gateway, an identifier of the core network entity for mobility management.

3. The method according to claim 1, further comprising:
receiving an address for the second application server.

4. The method according to claims 1, wherein the second application server triggers a session setup request for initiating relocation of the application session to the second application server.

5. The method according to claim 1, further comprising:
determining by the first application server that the user equipment is moving to the radio network being served by the second application server.

6. A method performed by a core network entity for mobility management, the method comprising:
receiving (201) a handover event notification request, from a first application server in a first edge cloud, for a user equipment, the request including an identifier for the user equipment, wherein the requested handover event notifications of the user equipment relate to handovers from a first service area of the first edge cloud to a second service area of a second edge cloud, wherein the second service area is served by a second application server located in the second edge cloud, wherein the first application server is running an application session for the user equipment; and
sending (213), to the first application server, a handover event notification that the user equipment is moving from the first service area to the second service area.

7. The method according to claim 6, further comprising:
receiving a request for the handover of the application session from the first application server to the second application server.

8. The method according to claim 6, further comprising:
triggering the handover of the application session from the first application server in the first edge cloud to the second application server.

9. The method according to claim 6, further comprising:
maintaining a service area of the first edge cloud and a service area of the second edge cloud; and
maintaining a mapping of the service area of the first edge cloud and a mapping of the service area in the second edge cloud.

10. The method according to claim 6, further comprising:
instructing a software defined networking mechanism to setup a routing path between a user plane gateway and the first application server.

11. The method according to claim 6, further comprising;
selecting a new user plane gateway or the second application server based on information received from a network entity.

12. The method according to claim 6, further comprising:
triggering a session setup request for initiating relocation of the application session to the second application server.

13. The method according to claim 12, further comprising:
sending the session setup request to a new user plane gateway and the second application server.

14. An apparatus in a first application server, the apparatus comprising means for performing:
sending (201), to a core network entity for mobility management, a request to subscribe for handover event notifications for a user equipment, the request including an identity for the user equipment, wherein the requested handover notifications of the user equipment relate to handovers from a first service area of a first edge cloud to a second service area of a second edge cloud, wherein the second service area is served by a second application server located in the second edge cloud, wherein the core network entity for mobility management is configured to participate in the handover signalling of a user equipment;
receiving (213), at the first application server located in the first edge cloud from the core network entity for mobility management, a handover event notification that the user equipment is moving from the first service area to the second service area, wherein the first application server is running an application session for the user equipment; and
transferring (214) the application session to the second application server.

15. An apparatus in a core network entity for mobility management, the apparatus comprising means for performing:
receiving a handover event notification request from a first application server in a first edge cloud for a user equipment, the request including an identifier for the user equipment, wherein the requested handover notifications of the user equipment relate to handovers from a first service area of the first edge cloud to a second service area of a second edge cloud, wherein the second service area is served by a second application server located in the second edge cloud, wherein the first application server is running an application session for the user equipment; and
sending, to the first application server, a handover event notification that the user equipment is moving from the first service area to the second service area.

16. The apparatus according to claim 15, wherein the means are configured to perform:
receiving a request for the handover of the application session from the first application server to the second application server.

17. The apparatus according to claim 15, wherein the means are configured to perform:
triggering the handover of the application session from the first application server in the first edge cloud to the second application server in the second edge cloud.

18. The apparatus according to claim 15, wherein the means are configured to perform:
maintaining a service area of the first edge cloud and a service area of the second edge cloud; and
maintaining a mapping of the service area of the first edge cloud and a mapping of the service area in the second edge cloud.

19. The apparatus according to claim 15, wherein the means are configured to perform:
instructing a software defined networking mechanism to setup a routing path between a user plane gateway and the first application server.

20. The apparatus according to claim 15, wherein the means are configured to perform:
selecting a new user plane gateway or the second application server based on information received from a network entity.

21. The apparatus according to claim 15, wherein the means are configured to perform:
triggering relocation of the application session to the second application server.

22. The apparatus according to claim 21, wherein the means are configured to perform:
sending the session setup request to a new user plane gateway and the second application server.

23. A computer program product encoding instructions for performing a process according to any of claims 1-13.

## Patentansprüche

1. Verfahren, das von einem ersten Anwendungsserver durchgeführt wird, der sich in einer ersten Randcloud befindet, wobei das Verfahren Folgendes umfasst:
Senden (201) einer Anforderung zum Abonnieren von Übergabeereignisbenachrichtigungen für eine Teilnehmereinrichtung an eine Kernnetzwerkentität für die Mobilitätsverwaltung, wobei die Anforderung eine Identität für die Teilnehmereinrichtung beinhaltet,
wobei die Übergabeereignisbenachrichtigungen für die Teilnehmereinrichtung Übergaben von einem ersten Dienstbereich der ersten Randcloud an einen zweiten Dienstbereich einer zweiten Randcloud betreffen, wobei der zweite Dienstbereich von einem zweiten Anwendungsserver bedient wird, der sich in der zweiten Randcloud befindet, wobei die Kernnetzwerkentität für die Mobilitätsverwaltung dazu ausgelegt ist, an der Übergabesignalisierung der Teilnehmereinrichtung teilzunehmen;
Empfangen (213) einer Übergabeereignisbenachrichtigung, die anzeigt, dass sich die Teilnehmereinrichtung vom ersten Dienstbereich zum zweiten Dienstbereich bewegt, von der Kernnetzwerkentität für die Mobilitätsverwaltung, wobei auf dem ersten Anwendungsserver eine Anwendungssitzung für die Teilnehmereinrichtung läuft; und
Übertragen (214) der Anwendungssitzung zum zweiten Anwendungsserver.

2. Verfahren nach Anspruch 1, das ferner Folgendes umfasst:
Empfangen einer Kennung der Kernnetzwerkentität für die Mobilitätsverwaltung von einem Benutzerebenengateway.

3. Verfahren nach Anspruch 1, das ferner Folgendes umfasst:
Empfangen einer Adresse für den zweiten Anwendungsserver.

4. Verfahren nach Anspruch 1, wobei der zweite Anwendungsserver eine Sitzungseinrichtungsanforderung zum Initiieren der Verlagerung der Anwendungssitzung zum zweiten Anwendungsserver auslöst.

5. Verfahren nach Anspruch 1, das ferner Folgendes umfasst:
Bestimmen durch den ersten Anwendungsserver, dass sich die Teilnehmereinrichtung zum Funknetzwerk bewegt, das vom zweiten Anwendungsserver bedient wird.

6. Verfahren, das von einer Kernnetzwerkentität für die Mobilitätsverwaltung durchgeführt wird, wobei das Verfahren Folgendes umfasst:
Empfangen (201) einer Übergabeereignisbenachrichtigungsanforderung für eine Teilnehmereinrichtung von einem ersten Anwendungsserver in einer ersten Randcloud, wobei die Anforderung eine Kennung für die Teilnehmereinrichtung beinhaltet, wobei die angeforderten Übergabeereignisbenachrichtigungen der Teilnehmereinrichtung Übergaben von einem ersten Dienstbereich der ersten Randcloud an einen zweiten Dienstbereich einer zweiten Randcloud betreffen, wobei der zweite Dienstbereich von einem zweiten Anwendungsserver bedient wird, der sich in der zweiten Randcloud befindet, wobei auf dem ersten Anwendungsserver eine Anwendungssitzung für die Teilnehmereinrichtung läuft; und
Senden (213) einer Übergabeereignisbenachrichtigung, dass sich die Teilnehmereinrichtung vom ersten Dienstbereich zum zweiten Dienstbereich bewegt, an den ersten Anwendungsserver.

7. Verfahren nach Anspruch 6, das ferner Folgendes umfasst:
Empfangen einer Anforderung für die Übergabe der Anwendungssitzung vom ersten Anwendungsserver an den zweiten Anwendungsserver.

8. Verfahren nach Anspruch 6, das ferner Folgendes umfasst:
Auslösen der Übergabe der Anwendungssitzung vom ersten Anwendungsserver in der ersten Randcloud an den zweiten Anwendungsserver.

9. Verfahren nach Anspruch 6, das ferner Folgendes umfasst:
Beibehalten eines Dienstbereichs der ersten Randcloud und eines Dienstbereichs der zweiten Randcloud und
Beibehalten einer Zuordnung des Dienstbereichs der ersten Randcloud und einer Zuordnung des Dienstbereichs der zweiten Randcloud.

10. Verfahren nach Anspruch 6, das ferner Folgendes umfasst:
Anweisen eines softwaredefinierten Vernetzungsmechanismus, einen Routingpfad zwischen einem Benutzerebenengateway und dem ersten Anwendungsserver einzurichten.

11. Verfahren nach Anspruch 6, das ferner Folgendes umfasst;
Auswählen eines neuen Benutzerebenengateways oder des zweiten Anwendungsservers auf Basis von Informationen, die von einer Netzwerkentität empfangen werden.

12. Verfahren nach Anspruch 6, das ferner Folgendes umfasst:
Auslösen einer Sitzungseinrichtungsanforderung zum Initiieren der Verlagerung der Anwendungssitzung zum zweiten Anwendungsserver.

13. Verfahren nach Anspruch 12, das ferner Folgendes umfasst:
Senden der Sitzungseinrichtungsanforderung an das neue Benutzerebenengateway und den zweiten Anwendungsserver.

14. Vorrichtung in einem ersten Anwendungsserver, wobei die Vorrichtung Mittel zum Durchführen von Folgendem umfasst:
Senden (201) einer Anforderung zum Abonnieren für Übergabeereignisbenachrichtigungen für eine Teilnehmereinrichtung an eine Kernnetzwerkentität für die Mobilitätsverwaltung, wobei die Anforderung eine Identität für die Teilnehmereinrichtung beinhaltet, wobei die angeforderten Übergabebenachrichtigungen der Teilnehmereinrichtung Übergaben von einem ersten Dienstbereich einer ersten Randcloud an einen zweiten Dienstbereich einer zweiten Randcloud betreffen, wobei der zweite Dienstbereich von einem zweiten Anwendungsserver bedient wird, der sich in der zweiten Randcloud befindet, wobei die Kernnetzwerkentität für die Mobilitätsverwaltung dazu ausgelegt ist, an der Übergabesignalisierung einer Teilnehmereinrichtung teilzunehmen;
Empfangen (213) einer Übergabeereignisbenachrichtigung, dass sich die Teilnehmereinrichtung vom ersten Dienstbereich zum zweiten Dienstbereich bewegt, am ersten Anwendungsserver, der sich in der ersten Randcloud befindet, von der Kernnetzwerkentität für die Mobilitätsverwaltung, wobei auf dem ersten Anwendungsserver eine Anwendungssitzung für die Teilnehmereinrichtung läuft; und
Übertragen (214) der Anwendungssitzung zum zweiten Anwendungsserver.

15. Vorrichtung in einer Kernnetzwerkentität für die Mobilitätsverwaltung, wobei die Vorrichtung Mittel zum Durchführen von Folgendem umfasst:
Empfangen einer Übergabeereignisbenachrichtigungsanforderung für eine Teilnehmereinrichtung von einem ersten Anwendungsserver in einer ersten Randcloud, wobei die Anforderung eine Kennung für die Teilnehmereinrichtung beinhaltet, wobei die angeforderten Übergabebenachrichtigungen der Teilnehmereinrichtung Übergaben von einem ersten Dienstbereich der ersten Randcloud an einen zweiten Dienstbereich einer zweiten Randcloud betreffen, wobei der zweite Dienstbereich von einem zweiten Anwendungsserver bedient wird, der sich in der zweiten Randcloud befindet, wobei auf dem ersten Anwendungsserver eine Anwendungssitzung für die Teilnehmereinrichtung läuft; und
Senden einer Übergabeereignisbenachrichtigung, dass sich die Teilnehmereinrichtung vom ersten Dienstbereich zum zweiten Dienstbereich bewegt, an den ersten Anwendungsserver.

16. Vorrichtung nach Anspruch 15, wobei die Mittel dazu ausgelegt sind, Folgendes durchzuführen:
Empfangen einer Anforderung für die Übergabe der Anwendungssitzung vom ersten Anwendungsserver an den zweiten Anwendungsserver.

17. Vorrichtung nach Anspruch 15, wobei die Mittel dazu ausgelegt sind, Folgendes durchzuführen:
Auslösen der Übergabe der Anwendungssitzung vom ersten Anwendungsserver in der ersten Randcloud an den zweiten Anwendungsserver in der zweiten Randcloud.

18. Vorrichtung nach Anspruch 15, wobei die Mittel dazu ausgelegt sind, Folgendes durchzuführen:
Beibehalten eines Dienstbereichs der ersten Randcloud und eines Dienstbereichs der zweiten Randcloud und
Beibehalten einer Zuordnung des Dienstbereichs der ersten Randcloud und einer Zuordnung des Dienstbereichs der zweiten Randcloud.

19. Vorrichtung nach Anspruch 15, wobei die Mittel dazu ausgelegt sind, Folgendes durchzuführen:
Anweisen eines softwaredefinierten Vernetzungsmechanismus, einen Routingpfad zwischen einem Benutzerebenengateway und dem ersten Anwendungsserver einzurichten.

20. Vorrichtung nach Anspruch 15, wobei die Mittel dazu ausgelegt sind, Folgendes durchzuführen:
Auswählen eines neuen Benutzerebenengateways oder des zweiten Anwendungsservers auf Basis von Informationen, die von einer Netzwerkentität empfangen werden.

21. Vorrichtung nach Anspruch 15, wobei die Mittel dazu ausgelegt sind, Folgendes durchzuführen:
Auslösen der Verlagerung der Anwendungssitzung zum zweiten Anwendungsserver.

22. Vorrichtung nach Anspruch 21, wobei die Mittel dazu ausgelegt sind, Folgendes durchzuführen:
Senden der Sitzungseinrichtungsanforderung an das neue Benutzerebenengateway und den zweiten Anwendungsserver.

23. Computerprogrammprodukt, in dem Anweisungen zum Durchführen eines Prozesses nach einem der Ansprüche 1-13 codiert sind.

## Revendications

1. Procédé réalisé par un premier serveur d'application situé dans un premier nuage de bord, le procédé comprenant :
l'envoi (201), à une entité de réseau central pour la gestion de la mobilité, d'une demande d'abonnement à des notifications d'événements de transfert intercellulaire pour un équipement utilisateur, la demande comportant une identité pour l'équipement utilisateur,
dans lequel les notifications d'événements de transfert intercellulaire pour l'équipement utilisateur concernent des transferts intercellulaires d'une première zone de service du premier nuage de bord à une deuxième zone de service d'un deuxième nuage de bord, dans lequel la deuxième zone de service est desservie par un deuxième serveur d'application situé dans le deuxième nuage de bord, dans lequel l'entité de réseau central pour la gestion de la mobilité est configurée pour participer à la signalisation de transfert intercellulaire de l'équipement utilisateur ;
la réception (213), à partir de l'entité de réseau central pour la gestion de la mobilité, d'une notification d'événement de transfert intercellulaire indiquant que l'équipement utilisateur se déplace de la première zone de service à la deuxième zone de service, dans lequel le premier serveur d'application exécute une session d'application pour l'équipement utilisateur ; et
le transfert (214) de la session d'application au deuxième serveur d'application.

2. Procédé selon la revendication 1, comprenant en outre :
la réception, à partir d'une passerelle de plan utilisateur, d'un identifiant de l'entité de réseau central pour la gestion de la mobilité.

3. Procédé selon la revendication 1, comprenant en outre :
la réception d'une adresse pour le deuxième serveur d'application.

4. Procédé selon la revendications 1, dans lequel le deuxième serveur d'application déclenche une demande d'établissement de session pour initier la relocalisation de la session d'application au deuxième serveur d'application.

5. Procédé selon la revendication 1, comprenant en outre :
la détermination, par le premier serveur d'application, du fait que l'équipement utilisateur se déplace vers le réseau radio desservi par le deuxième serveur d'application.

6. Procédé réalisé par une entité de réseau central pour la gestion de la mobilité, le procédé comprenant :
la réception (201) d'une demande de notification d'événement de transfert intercellulaire, à partir d'un premier serveur d'application dans un premier nuage de bord, pour un équipement utilisateur, la demande comportant un identifiant pour l'équipement utilisateur, dans lequel les notifications d'événements de transfert intercellulaire demandées de l'équipement utilisateur concernent des transferts intercellulaires d'une première zone de service du premier nuage de bord à une deuxième zone de service d'un deuxième nuage de bord, dans lequel la deuxième zone de service est desservie par un deuxième serveur d'application situé dans le deuxième nuage de bord, dans lequel le premier serveur d'application exécute une session d'application pour l'équipement utilisateur ; et
l'envoi (213), au premier serveur d'application, d'une notification d'événement de transfert intercellulaire précisant que l'équipement utilisateur se déplace de la première zone de service à la deuxième zone de service.

7. Procédé selon la revendication 6, comprenant en outre :
la réception d'une demande de transfert intercellulaire de la session d'application du premier serveur d'application au deuxième serveur d'application.

8. Procédé selon la revendication 6, comprenant en outre :
le déclenchement du transfert intercellulaire de la session d'application du premier serveur d'application dans le premier nuage de bord au deuxième serveur d'application.

9. Procédé selon la revendication 6, comprenant en outre :
le maintien d'une zone de service du premier nuage de bord et d'une zone de service du deuxième nuage de bord ; et
le maintien d'un mappage de la zone de service du premier nuage de bord et d'un mappage de la zone de service dans le deuxième nuage de bord.

10. Procédé selon la revendication 6, comprenant en outre :
l'instruction à un mécanisme de réseautage défini par logiciel d'établir un chemin de routage entre une passerelle de plan utilisateur et le premier serveur d'application.

11. Procédé selon la revendication 6, comprenant en outre ;
la sélection d'une nouvelle passerelle de plan utilisateur ou du deuxième serveur d'application sur la base d'informations reçues à partir d'une entité de réseau.

12. Procédé selon la revendication 6, comprenant en outre :
le déclenchement d'une demande d'établissement de session pour initier la relocalisation de la session d'application au deuxième serveur d'application.

13. Procédé selon la revendication 12, comprenant en outre :
l'envoi de la demande d'établissement de session à une nouvelle passerelle de plan utilisateur et au deuxième serveur d'application.

14. Appareil dans un premier serveur d'application, l'appareil comprenant des moyens pour réaliser :
l'envoi (201), à une entité de réseau central pour la gestion de la mobilité, d'une demande d'abonnement à des notifications d'événements de transfert intercellulaire pour un équipement utilisateur, la demande comportant une identité pour l'équipement utilisateur,
dans lequel les notifications de transfert intercellulaire demandées de l'équipement utilisateur concernent des transferts intercellulaires d'une première zone de service d'un premier nuage de bord à une deuxième zone de service d'un deuxième nuage de bord, dans lequel la deuxième zone de service est desservie par un deuxième serveur d'application situé dans le deuxième nuage de bord, dans lequel l'entité de réseau central pour la gestion de la mobilité est configurée pour participer à la signalisation de transfert intercellulaire d'un équipement utilisateur ;
la réception (213), au niveau du premier serveur d'application situé dans le premier nuage de bord, à partir de l'entité de réseau central pour la gestion de la mobilité, d'une notification d'événement de transfert intercellulaire précisant que l'équipement utilisateur se déplace de la première zone de service à la deuxième zone de service, dans lequel le premier serveur d'application exécute une session d'application pour l'équipement utilisateur ; et
le transfert (214) de la session d'application au deuxième serveur d'application.

15. Appareil dans une entité de réseau central pour la gestion de la mobilité, l'appareil comprenant des moyens pour réaliser :
la réception d'une demande de notification d'événement de transfert intercellulaire à partir d'un premier serveur d'application dans un premier nuage de bord pour un équipement utilisateur, la demande comportant un identifiant pour l'équipement utilisateur, dans lequel les notifications d'événements de transfert intercellulaire demandées de l'équipement utilisateur concernent des transferts intercellulaires d'une première zone de service du premier nuage de bord à une deuxième zone de service d'un deuxième nuage de bord, dans lequel la deuxième zone de service est desservie par un deuxième serveur d'application situé dans le deuxième nuage de bord, dans lequel le premier serveur d'application exécute une session d'application pour l'équipement utilisateur ; et
l'envoi, au premier serveur d'application, d'une notification d'événement de transfert intercellulaire précisant que l'équipement utilisateur se déplace de la première zone de service à la deuxième zone de service.

16. Appareil selon la revendication 15, dans lequel les moyens sont configurés pour réaliser :
la réception d'une demande de transfert intercellulaire de la session d'application du premier serveur d'application au deuxième serveur d'application.

17. Appareil selon la revendication 15, dans lequel les moyens sont configurés pour réaliser :
le déclenchement du transfert intercellulaire de la session d'application du premier serveur d'application dans le premier nuage de bord au deuxième serveur d'application dans le deuxième nuage de bord.

18. Appareil selon la revendication 15, dans lequel les moyens sont configurés pour réaliser :
le maintien d'une zone de service du premier nuage de bord et d'une zone de service du deuxième nuage de bord ; et
le maintien d'un mappage de la zone de service du premier nuage de bord et d'un mappage de la zone de service dans le deuxième nuage de bord.

19. Appareil selon la revendication 15, dans lequel les moyens sont configurés pour réaliser :
l'instruction à un mécanisme de réseautage défini par logiciel d'établir un chemin de routage entre une passerelle de plan utilisateur et le premier serveur d'application.

20. Appareil selon la revendication 15, dans lequel les moyens sont configurés pour réaliser :
la sélection d'une nouvelle passerelle de plan utilisateur ou du deuxième serveur d'application sur la base d'informations reçues à partir d'une entité de réseau.

21. Appareil selon la revendication 15, dans lequel les moyens sont configurés pour réaliser :
le déclenchement de la relocalisation de la session d'application au deuxième serveur d'application.

22. Appareil selon la revendication 21, dans lequel les moyens sont configurés pour réaliser :
l'envoi de la demande d'établissement de session à une nouvelle passerelle de plan utilisateur et au deuxième serveur d'application.

23. Produit de programme informatique codant des instructions pour réaliser un processus selon l'une quelconque des revendications 1 à 13.
